# EUROPEAN PATENT APPLICATION

(11) **EP 4 653 728 A1**
(43) Date of publication of application: **26.11.2025**
(21) Application number: 24905425.5
(22) Date of filing: 24.05.2024
(51) Int. Cl.: F16H 57/04, B60W 20/15

(54) **HYDRAULIC SYSTEM, HYBRID TRANSMISSION AND VEHICLE**

(30) Priority: 20.12.2023 CN 202311767646
(71) Applicant: Chery Automobile Co., Ltd., Wuhu, Anhui 241006 (CN)
(72) Inventor: XU, Chuanfei, Wuhu, Anhui 241006 (CN); LU, Wenyue, Wuhu, Anhui 241006 (CN); WANG, Chaojie, Wuhu, Anhui 241006 (CN)
(74) Representative: Yang, Shu
(86) International application number: PCT/CN2024/095278
(87) International publication number: WO 2025/129921

(57) **Abstract**

A hydraulic system, applied to a hybrid transmission. The hydraulic system comprises an oil supply module (1), a high-pressure module (2) and a cooling and lubricating module (3). The oil supply module (1) comprises an electric pump (11). The electric pump (11) is connected to the high-pressure module (2). The high-pressure module (2) is configured to supply oil to an actuating mechanism (100) of a vehicle by means of the electric pump (11). The cooling and lubricating module (3) is used for cooling and lubricating a piece to be cooled of the vehicle. The cooling and lubricating module (3) comprises a first switch valve (31). The first switch valve (31) is arranged between the electric pump (11) and the piece to be cooled, and the first switch valve (31) is configured to be opened or closed on the basis of an operation mode of the vehicle.

## Description

The present disclosure claims priority to Chinese Patent Application No. 202311767646.8, filed on December 20, 2023, and entitled "HYDRAULIC SYSTEM, HYBRID TRANSMISSION, AND VEHICLE", the disclosure of which is incorporated herein by reference in its entirety.

### TECHNICAL FIELD

The present disclosure relates to the field of automotive transmission technologies, and in particular, relates to a hydraulic system, a hybrid transmission, and a vehicle.

### BACKGROUND

With the development of technology and the improvement of people's environmental protection concepts, new energy vehicles have been widely used. Among new energy vehicles, hybrid vehicles have been increasingly recognized by users due to their high efficiency, low fuel consumption, and long cruising range.

For hybrid vehicles, an efficient hybrid powertrain is a core competitive advantage. In the hybrid powertrain, a dedicated hybrid transmission is a critical component, and its working efficiency is a key factor influencing the fuel consumption of the whole vehicle. The hydraulic system is a significant factor affecting the efficiency of the hybrid transmission.

The hydraulic systems of existing hybrid transmissions have poorly designed cooling lubrication oil circuits and high-pressure oil circuits, leading to excessive pump operation and difficulty in meeting hydraulic oil volume requirements under different vehicle speeds or modes. This increases energy consumption and reduces the efficiency of the hydraulic system.

### SUMMARY

In view of this, the present disclosure provides a hydraulic system, a hybrid transmission, and a vehicle, which can improve the efficiency of the hydraulic system.

Specifically, the technical solutions are as follows.
In a first aspect, the embodiments of the present disclosure provide a hybrid transmission, including a hydraulic system. The hydraulic system includes an oil supply module, a high-pressure module, and a cooling-lubricating module;
wherein the oil supply module includes an electric pump connected to the high-pressure module; and
the high-pressure module is configured to supply oil to an actuator of a vehicle through the electric pump, and the cooling-lubricating module is configured to cool and lubricate a component to be cooled of the vehicle, and the cooling-lubricating module includes a first on-off valve, wherein the first on-off value is arranged between the electric pump and the component to be cooled, and the first on-off valve is configured to be opened or closed according to an operation mode of the vehicle.

In some embodiments, the oil supply module further includes a mechanical pump, wherein the mechanical pump is connected to the cooling-lubricating module and configured to operate with wheels or a drive motor of the vehicle.

In some embodiments, the cooling-lubricating module further includes a second on-off valve, an oil cooler, and a temperature detection component, wherein the second on-off valve and the oil cooler are arranged in parallel between the mechanical pump and the component to be cooled, the temperature detection component is arranged at the output end of the oil cooler and the output end of the second on-off valve, and the second on-off valve is opened or closed according to an oil temperature detected by the temperature detection component.

In some embodiments, the oil supply module further includes an oil tank, and the electric pump and the mechanical pump are respectively connected to the oil tank; and
the cooling-lubricating module further includes an overflow valve, an input end of the overflow valve is connected to an input end of the second on-off valve, and an output end of the overflow valve is connected to an end of the mechanical pump close to the oil tank.

In some embodiments, the cooling-lubricating module further includes a flow control valve, wherein an input end of the flow control valve is respectively connected to an output end of the first on-off valve, an output end of the oil cooler, and an output end of the second on-off valve, and an output end of the flow control valve is connected to the component to be cooled.

In some embodiments, the high-pressure module includes a control valve, wherein an input end of the control valve is connected to the electric pump, and an output end of the control valve is connected to the actuator.

In some embodiments, the high-pressure module further includes an accumulator and a pressure detection component connected to each other, wherein both the accumulator and the pressure detection component are disposed between the control valve and the electric pump, and the accumulator is configured to charge oil for energy storage or supply oil to the control valve according to a pressure detected by the pressure detection component.

In some embodiments, the high-pressure module further includes a safety valve, wherein the safety valve is arranged between the electric pump and the first on-off valve, and upstream of the control valve.

In a second aspect, an embodiment of the present disclosure provides a hybrid transmission, which includes the hydraulic system provided in any one of the embodiments of the first aspect.

In a third aspect, an embodiment of the present disclosure provides a vehicle, which includes the hybrid transmission provided in the embodiment of the second aspect.

In some embodiments, the vehicle has one or more of operation modes:
a pure electric drive mode, in which the first on-off valve is opened;
a reverse mode, in which the first on-off valve is opened; or
a hybrid mode, in which the first on-off valve is closed.

The beneficial effects of the technical solutions provided in the embodiments of the present disclosure at least include: By arranging the first on-off valve between the electric pump and the component to be cooled, the first on-off valve is opened or closed according to the operating mode of the vehicle, which can adapt to the oil demand of the high-pressure module and the cooling-lubricating module under different vehicle speeds or different modes. It can not only supply oil to the actuator of the vehicle independently through the electric pump, but also supplement the flow of the high-pressure module to the cooling-lubricating module through the electric pump, effectively controlling the flow distribution of the electric pump to the high-pressure module and the cooling-lubricating module, making the hydraulic system more flexible and controllable, and greatly improving the working efficiency of the hydraulic system.

### BRIEF DESCRIPTION OF DRAWINGS

To describe the technical solutions in the embodiments of the present disclosure more clearly, the following briefly describes the accompanying drawings required for describing the embodiments. Apparently, the accompanying drawings in the following description show merely some embodiments of the present disclosure, and those of ordinary skill in the art may still derive other drawings from these accompanying drawings without creative efforts.
FIG. 1 is a schematic structural diagram of a hydraulic system according to some embodiments of the present disclosure;
FIG. 2 is a schematic diagram of the hydraulic principle of a hydraulic system in pure electric drive mode according to some embodiments of the present disclosure;
FIG. 3 is a schematic diagram of the hydraulic principle, when an electric pump supplies oil to a shift mechanism in pure electric drive mode, of a hydraulic system according to some embodiments of the present disclosure;
FIG. 4 is a schematic diagram of the hydraulic principle of a hydraulic system in reverse mode according to some embodiments of the present disclosure; and
FIG. 5 is a schematic diagram of the hydraulic principle of a hydraulic system in hybrid mode according to some embodiments of the present disclosure.

The reference numerals in the drawings are respectively indicated as:
1, oil supply module; 11, electric pump; 12, mechanical pump; 13, oil tank; 14, first filter; 15, sub-oil tank; 16, second one-way valve;
2, high-pressure module; 21, third one-way valve; 22, second filter; 23, safety valve; 24, fourth one-way valve; 25, accumulator; 26, pressure detection part; 27, control valve;
3, cooling-lubricating module; 31, first on-off valve; 32, second on-off valve; 33, oil cooler; 34, temperature detection component; 35, flow control valve; 36, overflow valve; 37, first one-way valve;
100, actuator; 101, clutch; 102, shift mechanism.

Through the above drawings, the clear embodiments of the present disclosure have been shown, and there will be a more detailed description in the following text. These drawings and text descriptions are not intended to limit the scope of the concept of the present disclosure in any way, but to explain the concept of the present disclosure to those skilled in the art by referring to specific embodiments.

### DETAILED DESCRIPTION

The technical solutions in the embodiments of the present disclosure will be clearly and completely described below in conjunction with the accompanying drawings in the embodiments of the present disclosure. Obviously, the described embodiments are part of the embodiments of the present disclosure, rather than all of them. Based on the embodiments in this application, all other embodiments obtained by those of ordinary skill in the art without making creative efforts shall fall within the protection scope of this application.

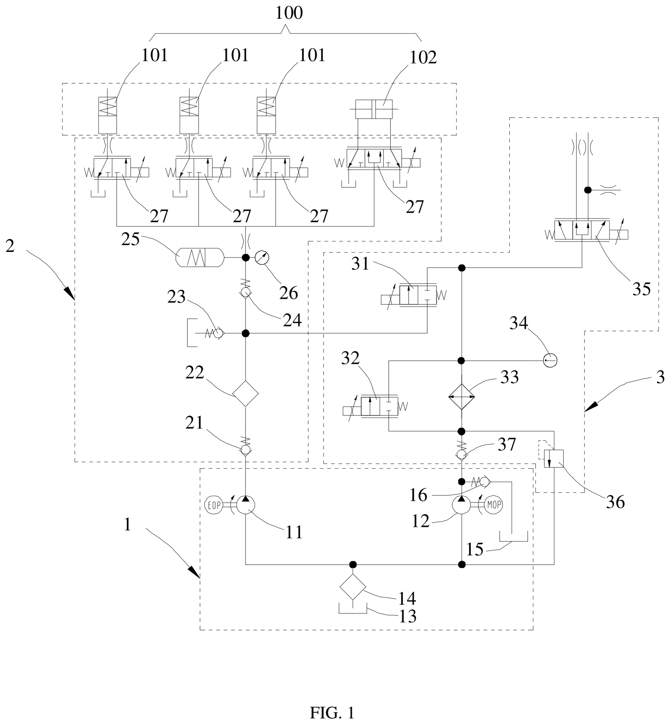

The directional nouns involved in the embodiments of the present disclosure, such as "upper," "lower," "side," etc., are generally based on the relative relationship of the orientations shown in FIG. 1, and these directional nouns are only used to more clearly describe the structure and the relationship between structures, not to describe absolute orientations. When the product is placed in different postures, the orientation may change, for example, "upper" and "lower" may be interchanged.

Unless otherwise defined, all technical terms used in the embodiments of the present disclosure have the same meanings as commonly understood by those of ordinary skill in the art. Some technical terms appearing in the embodiments of the present disclosure are explained below.

In order to make the technical solutions and advantages of the present disclosure clearer, the implementations of the present disclosure will be described in further detail below in conjunction with the accompanying drawings.

As shown in FIG. 1, the embodiment of the present disclosure provides a hydraulic system applied to a hybrid transmission. The hydraulic system includes an oil supply module 1, a high-pressure module 2, and a cooling-lubricating module 3.

The oil supply module 1 includes an electric pump 11, and the electric pump 11 is connected to the high-pressure module 2.

The high-pressure module 2 is configured to supply oil to the actuator 100 of the vehicle through the electric pump 11. The cooling-lubricating module 3 is configured to cool and lubricate a component to be cooled (not shown in the figure) of the vehicle. The cooling-lubricating module 3 includes a first on-off valve 31. The first on-off valve 31 is arranged between the electric pump 11 and the component to be cooled, and the first on-off valve 31 is configured to be opened or closed according to the operating mode of the vehicle.

Exemplarily, the actuator 100 of the vehicle is a clutch 101, a shift mechanism 102, etc. The electric pump 11 has its own motor and can supply oil to the actuator 100 to make the actuator 100 work normally.

The first on-off valve 31 can be opened or closed. In the case that the first on-off valve 31 is opened, the electric pump 11 is connected to the component to be cooled, and the electric pump 11 delivers oil to the component to be cooled to cool and lubricate the component to be cooled. In the case that the first on-off valve 31 is closed, the electric pump 11 is isolated from the component to be cooled.

Exemplarily, the cooling-lubricating module 3 is provided with a driving part. In the case that the first on-off valve 31 is closed and the component to be cooled needs cooling and lubrication, the cooling-lubricating module 3 delivers oil to the component to be cooled through the driving part.

Exemplarily, the operating modes of the vehicle include one or more of pure electric drive mode, reverse mode, and hybrid mode. In different operating modes, the first on-off valve 31 can perform different operations, thereby selectively supplying oil to the cooling-lubricating module 3.

In the hydraulic system provided by the embodiments of the present disclosure, by arranging the first on-off valve between the electric pump 11 and the component to be cooled, the first on-off valve 31 is opened or closed according to the operating mode of the vehicle, which can adapt to the oil demand of the high-pressure module 2 and the cooling-lubricating module 3 under different vehicle speeds or different modes. It can not only supply oil to the actuator 100 of the vehicle independently through the electric pump 11, but also supplement the flow of the high-pressure module 2 to the cooling-lubricating module 3 through the electric pump 11, effectively controlling the flow distribution of the electric pump 11 to the high-pressure module 2 and the cooling-lubricating module 3, making the hydraulic system more flexible and controllable, and greatly improving the working efficiency of the hydraulic system.

In a specific embodiment, the oil supply module 1 further includes a mechanical pump 12, which is connected to the cooling-lubricating module 3 and configured to operate with the wheels or the drive motor of the vehicle.

Exemplarily, the mechanical pump 12 is drivingly connected to the wheels/drive motor through coaxial direct drive, gear transmission, sprocket-chain transmission, etc. When the vehicle moves forward, the mechanical pump 12 rotates forward to supply oil to the cooling-lubricating module 3; and when the vehicle moves backward, the mechanical pump 12 rotates reversely and can suck oil.

As shown in FIG. 1, the mechanical pump 12 is arranged in parallel with the electric pump 11, and oil can be delivered to the component to be cooled through the mechanical pump 12. It can be understood that "the mechanical pump 12 is arranged in parallel with the electric pump 11" means that the input end of the mechanical pump 12 and the input end of the electric pump 11 are both connected to the oil tank 13, where the input end of the mechanical pump 12 is the input end when the mechanical pump 12 rotates forward.

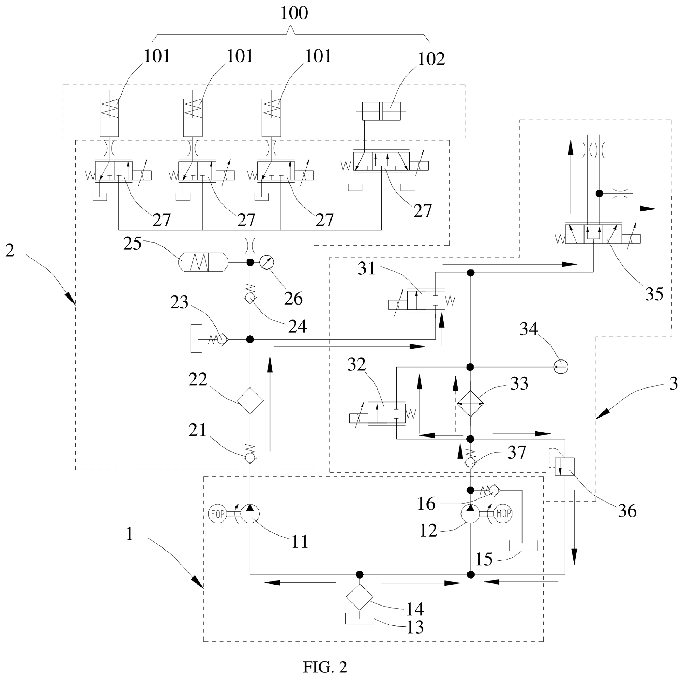

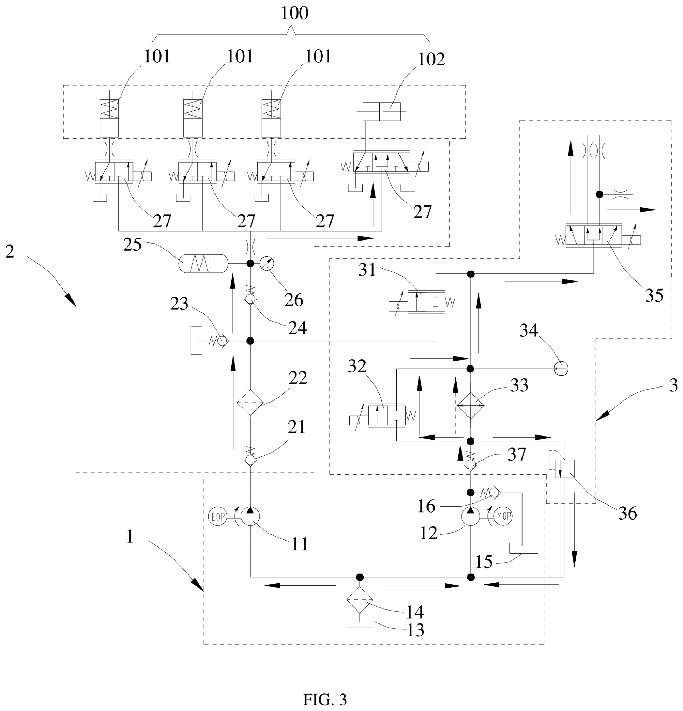

Exemplarily, as shown in FIG. 2, in the pure electric drive mode, the drive motor drives the vehicle, the mechanical pump 12 starts to supply oil, and the first on-off valve 31 is opened. The oil is pumped to the component to be cooled by the electric pump 11, which reduces the load of the drive motor on the cooling-lubricating module 3 and is beneficial to improve the working efficiency of the hydraulic system. In this mode, if the vehicle needs to switch gears, as shown in FIG. 3, the first on-off valve 31 is closed briefly, such that the electric pump 11 provides oil for the shift mechanism 102. After the shift is completed, the first on-off valve 31 is opened, and the electric pump 11 continues to provide oil for the cooling-lubricating module 3.

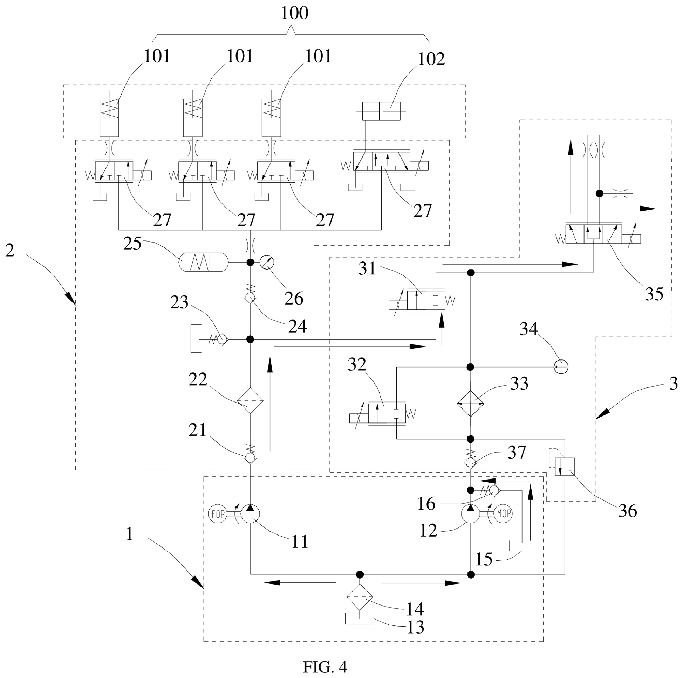

Exemplarily, as shown in FIG. 4, in the reverse mode, the wheels reverse, the mechanical pump 12 does not deliver oil to the component to be cooled, the first on-off valve 31 is opened, and the oil is pumped to the component to be cooled by the electric pump 11 to cool and lubricate the component to be cooled.

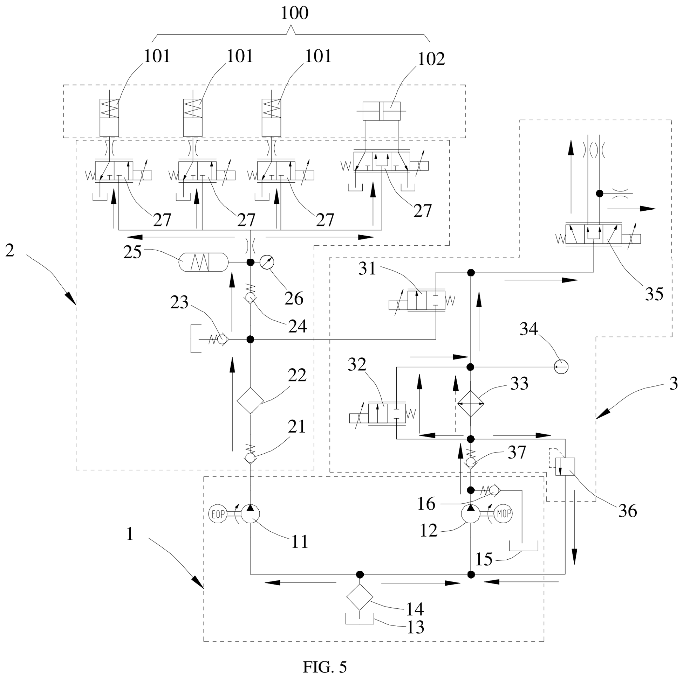

Exemplarily, as shown in FIG. 5, in the hybrid mode, the engine of the vehicle is in the operating state of driving or generating electricity, and the hydraulic system needs to continuously provide high-pressure oil to provide hydraulic clamping force for the actuator 100, such as the clutch 101. At this time, the first on-off valve 31 is closed, the electric pump 11 provides oil for the actuator 100, and the cooling-lubricating module 3 outputs oil through the mechanical pump 12 to cool and lubricate the component to be cooled.

In a specific embodiment, the cooling-lubricating module 3 further includes a second on-off valve 32, an oil cooler 33, and a temperature detection component 34. The second on-off valve 32 and the oil cooler 33 are arranged in parallel between the mechanical pump 12 and the component to be cooled. The temperature detection component 34 is arranged at the output end of the oil cooler 33 and the output end of the second on-off valve 32, and the second on-off valve 32 is opened or closed according to the oil temperature detected by the temperature detection component 34. It can be understood that "the second on-off valve 32 and the oil cooler 33 are connected in parallel" means that the input end of the second on-off valve 32 and the input end of the oil cooler 33 are both connected to the mechanical pump 12, and the output end of the second on-off valve 32 and the output end of the oil cooler 33 are both connected to the component to be cooled.

The oil cooler 33 is used to cool the oil, and the temperature detection component 34 is used to detect the oil temperature.

Exemplarily, in the case that the oil temperature is less than or equal to the preset oil temperature, the oil temperature of the cooling-lubricating module 3 is relatively low. At this time, the second on-off valve 32 is opened, and the oil does not pass through the oil cooler 33, or only a small amount of oil passes through the oil cooler 33. The oil temperature rises rapidly, which can improve the working efficiency of the hybrid transmission. In the case that the oil temperature is higher than the preset oil temperature, the driving load of the vehicle is large, and the oil temperature is high. At this time, the second on-off valve 32 is closed, such that the oil is cooled by the oil cooler 33 and then used to cool and lubricate the component to be cooled, preventing the component to be cooled from overheating and affecting the working effect.

Optionally, the second on-off valve 32 is communicatively connected to the temperature detection component 34. In the case that the oil temperature is higher than the preset oil temperature, the temperature detection component 34 sends a first signal to the second on-off valve 32, and the second on-off valve 32 is closed after receiving the first signal. In the case that the oil temperature is less than or equal to the preset oil temperature, the temperature detection component 34 sends a second signal to the second on-off valve 32, and the second on-off valve 32 is opened after receiving the second signal.

Optionally, the second on-off valve 32 and the temperature detection component 34 are respectively communicatively connected to the control module of the vehicle. In the case that the oil temperature is higher than the preset oil temperature, the temperature detection component 34 sends a third signal to the second on-off valve 32. After receiving the third signal, the control module sends a fourth signal to the second on-off valve 32, and the second on-off valve 32 is closed after receiving the fourth signal. In the case that the oil temperature is less than or equal to the preset oil temperature, the temperature detection component 34 sends a fifth signal to the control module. After receiving the fifth signal, the control module sends a sixth signal to the second on-off valve 32, and the second on-off valve 32 is opened after receiving the sixth signal.

In a further embodiment, the oil supply module 1 further includes an oil tank 13, the electric pump 11 and the mechanical pump 12 are respectively connected to the oil tank 13, the cooling-lubricating module 3 further includes an overflow valve 36, the input end of the overflow valve 36 is connected to the input end of the second on-off valve 32, and the output end of the overflow valve 36 is connected to the end of the mechanical pump 12 close to the oil tank 13.

As shown in FIG. 1, the oil supply module 1 further includes a first filter 14. The oil tank 13 and the first filter 14 are disposed upstream of the electric pump 11 and the mechanical pump 12, and the first filter 14 is disposed at the upstream end of the electric pump 11 and the mechanical pump 12, which is used to filter the oil flowing out of the oil tank 13 and provide clean oil for the high-pressure module 2 and the cooling-lubricating module 3.

The overflow valve 36 has the functions of pressure regulation and voltage stabilization. As shown in FIG. 1, the first end of the overflow valve 36 is connected to the input ends of the second on-off valve 32 and the oil cooler 33, the second end of the overflow valve 36 is connected between a mechanical valve and the first filter 14, and the conduction direction of the overflow valve 36 is from the first end to the second end.

When the vehicle speed is high and the cooling and lubrication demand reaches the maximum, the excess oil in the cooling-lubricating module 3 flows back to the mechanical pump 12 or the oil tank 13 through the overflow valve 36, which can stabilize the oil pressure of the cooling-lubricating module 3 and improve the utilization rate of the oil.

Specifically, the cooling and lubrication system further includes a first one-way valve 37, a second one-way valve 16, and a sub-oil tank 15.

As shown in FIG. 1, the first one-way valve 37 is connected between the second on-off valve 32 and the mechanical pump 12 (also between the oil cooler 33 and the mechanical pump 12, and between the first end of the overflow valve 36 and the mechanical pump 12). The conduction direction of the first one-way valve 37 is from the mechanical pump 12 to the second on-off valve 32, the oil cooler 33, and the overflow valve 36.

The first end of the second one-way valve 16 is connected between the mechanical pump 12 and the first one-way valve 37, the second end is connected to the sub-oil tank 15, and the conduction direction of the second one-way valve 16 is from the second end to the first end. When the vehicle moves forward, the mechanical pump 12 rotates forward, the first one-way valve 37 is conducted, the second one-way valve 16 is blocked, and the oil flows from the mechanical pump 12 to the component to be cooled through the second on-off valve 32 or the oil cooler 33; and when the vehicle moves backward, the mechanical pump 12 rotates reversely, the first one-way valve 37 is blocked, the second one-way valve 16 is conducted, and the mechanical pump 12 sucks oil from the sub-oil tank 15 for subsequent use.

The cooling-lubricating module 3 further includes a flow control valve 35. The input end of the flow control valve 35 is connected to the output end of the first on-off valve 31, the output end of the oil cooler 33, and the output end of the second on-off valve 32, and the output end of the flow control valve 35 is connected to the component to be cooled.

The output ends of the first on-off valve 31, the second on-off valve 32, and the oil cooler 33 are all connected to the flow control valve 35, and the oil flowing out of the electric pump 11 and the mechanical pump 12 flows to the component to be cooled through the flow control valve 35.

The flow control valve 35 can distribute the flow to different components to be cooled, so as to achieve sufficient cooling and lubrication of each component to be cooled.

In a specific embodiment, the high-pressure module 2 includes a control valve 27. The input end of the control valve 27 is connected to the electric pump 11, and the output end of the control valve 27 is connected to the actuator 100.

Exemplarily, the control valve 27 is a solenoid valve, and the control valve 27 can be opened or closed. In the case that the actuator 100 is working, the control valve 27 is opened, and the oil output by the electric pump 11 can flow to the actuator 100 through the control valve 27; and in the case that the control valve 27 is not working, the control valve 27 is closed, and the oil output by the electric pump 11 cannot flow to the actuator 100.

Specifically, each control valve 27 corresponds to one actuator 100. As shown in FIG. 1, the actuator 100 includes a shift mechanism 102 and three clutches 101 arranged in parallel, and there are four control valves 27, which correspond to the clutches 101 or the shift mechanism 102 one by one.

In this embodiment, by setting the control valve 27, the oil in the high-pressure module 2 can be precisely controlled, and the oil can be delivered according to the demand of the actuator 100, thereby improving the working efficiency of the hybrid transmission.

In a further embodiment, the high-pressure module 2 further includes an accumulator 25 and a pressure detection component 26 connected to each other. Both the accumulator 25 and the pressure detection component 26 are disposed between the control valve 27 and the electric pump 11, and the accumulator 25 is configured to charge oil for energy storage or supply oil to the control valve 27 according to the pressure detected by the pressure detection component 26.

The accumulator 25 is used to store hydraulic energy in the hydraulic system, and can release the hydraulic energy to the actuator 100 during work, such that the actuator 100 can obtain oil. That is, the actuator 100 can obtain oil directly from the electric pump 11, or the electric pump 11 does not output oil to the actuator 100, and the actuator 100 obtains oil directly from the accumulator 25.

The pressure detection component 26 is used to detect the oil pressure upstream of the control valve 27. In the case that the oil pressure is greater than or equal to the required oil pressure of the actuator 100, the accumulator 25 can provide oil for the actuator 100; and in the case that the oil pressure is less than the required oil pressure of the actuator 100, the electric pump 11 directly provides oil for the actuator 100, and the excess oil is stored in the accumulator 25.

Optionally, the high-pressure module 2 further includes a third one-way valve 21 and a fourth one-way valve 24. The third one-way valve 21 and the fourth one-way valve 24 are sequentially connected in series downstream of the electric pump 11, and the input end of the first on-off valve 31 is connected between the third one-way valve 21 and the fourth one-way valve 24. The conduction directions of the third one-way valve 21 and the fourth one-way valve 24 are both from the electric pump 11 to the actuator 100. The third one-way valve 21 is used to ensure that the oil output by the electric pump 11 flows to the first on-off valve 31, the accumulator 25, and the actuator 100, and the fourth one-way valve 24 is used to ensure that the oil output by the electric pump 11 flows to the accumulator 25 and the actuator 100.

Optionally, the high-pressure module 2 further includes a second filter 22, which is connected between the third one-way valve 21 and the fourth one-way valve 24 and used to filter and purify the oil output by the electric pump 11, such that the oil flowing to the actuator 100 and the component to be cooled is relatively clean.

In a further embodiment, the high-pressure module 2 further includes a safety valve 23, which is arranged between the electric pump 11 and the first on-off valve 31 and upstream of the control valve 27.

The safety valve 23 is used to limit the maximum oil pressure of the high-pressure module 2 and protect the safety of the high-pressure module 2 and the cooling-lubricating module 3.

In a specific embodiment, the working process of the hydraulic system provided by the embodiments of the present disclosure in different modes includes:
(1) In the pure electric drive mode, the drive motor drives the vehicle to run, the hydraulic system does not need to transmit power, the high-pressure module 2 does not work, and the hybrid transmission only has the demand for cooling and lubrication.

At this time, as shown in FIG. 2, the oil in the oil tank 13 flows to the electric pump 11 and the mechanical pump 12 through the first filter 14, and the oil output by the electric pump 11 flows through the third one-way valve 21, the second filter 22, the first on-off valve 31 and the flow control valve 35 in sequence to reach the component to be cooled.

Meanwhile, the mechanical pump 12 rotates forward. When the temperature detection component 34 detects that the oil temperature is low, the second on-off valve 32 is opened and the first one-way valve 37 is conducted. The oil in the oil tank 13 flows through the first filter 14 to the mechanical pump 12, is output to the downstream by the mechanical pump 12, flows through the first one-way valve 37, the second on-off valve 32, and the flow control valve 35 in sequence to reach the component to be cooled, and cools and lubricates the component to be cooled. The excess oil output by the mechanical pump 12 flows back to the mechanical valve through the overflow valve 36.

When the temperature detection component 34 detects that the oil temperature is high, the second on-off valve 32 is opened and the first one-way valve 37 is conducted, and the oil output by the mechanical pump 12 flows through the first one-way valve 37, the oil cooler 33 and the flow control valve 35 in sequence to reach the component to be cooled.

In this mode, if the vehicle needs to switch gears, as shown in FIG. 3, the first on-off valve 31 is closed briefly, the control valve 27 connected to the shift mechanism 102 is opened, and the oil output by the electric pump 11 flows through the third one-way valve 21, the second filter 22, the fourth one-way valve 24, the accumulator 25, and the control valve 27 in sequence to reach the shift mechanism 102. After the shift is completed, the first on-off valve 31 is opened, and the electric pump 11 continues to provide oil for the cooling-lubricating module 3. Alternatively, if the vehicle needs to switch gears and there is oil in the accumulator 25, and the oil pressure detected by the pressure detection component 26 is greater than the oil pressure demand of the shift mechanism 102, the electric pump 11 does not work, and the accumulator 25 supplies oil to the shift mechanism 102.

(2) In the reverse mode, the wheels reverse. As shown in FIG. 4, the mechanical pump 12 does not deliver oil to the component to be cooled, the first on-off valve 31 is opened, and the oil output by the electric pump 11 flows through the third one-way valve 21, the second filter 22, the first on-off valve 31, and the flow control valve 35 in sequence to reach the component to be cooled.

Meanwhile, the mechanical pump 12 rotates reversely, the first one-way valve 37 is blocked, the second one-way valve 16 is conducted, and the mechanical pump 12 sucks oil from the sub-oil tank 15 for subsequent use.

(3) In the hybrid mode, the hybrid transmission needs high-pressure oil, and the hydraulic system continuously provides high-pressure oil.

Specifically, the engine of the vehicle is in the operating state of driving or generating electricity, and the hydraulic system needs to continuously provide high-pressure oil to provide hydraulic clamping force for the actuator 100, such as the clutch 101. At this time, as shown in FIG. 5, the first on-off valve 31 is closed, the oil output by the electric pump 11 flows through the third one-way valve 21, the second filter 22, the fourth one-way valve 24, the accumulator 25, and the control valve 27 in sequence to reach the shift mechanism 102.

Meanwhile, the cooling-lubricating module 3 outputs oil through the mechanical pump 12 to cool and lubricate the component to be cooled. The mechanical pump 12 rotates forward. When the temperature detection component 34 detects that the oil temperature is low, the second on-off valve 32 is opened and the first one-way valve 37 is conducted. The oil in the oil tank 13 flows through the first filter 14 to the mechanical pump 12, is output to the downstream by the mechanical pump 12, and then flows through the first one-way valve 37, the second on-off valve 32, and the flow control valve 35 in sequence to reach the component to be cooled, thereby cooling and lubricating them. The excess oil output by the mechanical pump 12 flows back to the mechanical valve through the overflow valve 36. When the temperature detection component 34 detects that the oil temperature is high, the second on-off valve 32 is opened and the first one-way valve 37 is conducted, and the oil output by the mechanical pump 12 flows through the first one-way valve 37, the oil cooler 33, and the flow control valve 35 in sequence to reach the component to be cooled.

The embodiments of the present disclosure also provide a hybrid transmission, which includes the hydraulic system provided in any of the above embodiments.

The embodiment of the present disclosure also provides a vehicle, which includes the hybrid transmission provided in any of the above embodiments.

Specifically, the vehicle is a hybrid model.

In a further embodiment, the vehicle has one or more of the following operating modes:
The pure electric drive mode, in which the first on-off valve 31 is opened;
The reverse mode, in which the first on-off valve 31 is opened; or
The hybrid mode, in which the first on-off valve 31 is closed.

In the embodiments, in different operating modes, the first on-off valve 31 can perform different operations, thereby selectively supplying oil to the cooling-lubricating module 3.

Exemplarily, as shown in FIG. 2, in the pure electric drive mode, the drive motor drives the vehicle, the cooling-lubricating module 3 starts to supply oil to the component to be cooled, and the first on-off valve 31 is opened. The oil is pumped to the component to be cooled by the electric pump 11, which reduces the load of the drive motor on the cooling-lubricating module 3 and helps to improve the working efficiency of the hydraulic system. In this mode, if the vehicle needs to switch gears, as shown in FIG. 3, the first on-off valve 31 is briefly closed, such that the electric pump 11 supplies oil to the shift mechanism 102. After the gear shifting is completed, the first on-off valve 31 is opened, and the electric pump 11 continues to supply oil to the cooling-lubricating module 3.

Exemplarily, as shown in FIG. 4, in the reverse mode, the wheels reverse, the cooling-lubricating module 3 does not deliver oil to the component to be cooled, the first on-off valve 31 is opened, and the oil is pumped to the component to be cooled by the electric pump 11 to cool and lubricate the component to be cooled.

Exemplarily, as shown in FIG. 5, in the hybrid mode, the engine of the vehicle is in a running state of driving or generating electricity, and the hydraulic system needs to continuously provide high-pressure oil to provide hydraulic clamping force for the actuators 100, such as the clutch 101. At this time, the first on-off valve 31 is closed, the electric pump 11 supplies oil to the actuators 100, and the cooling-lubricating module 3 outputs oil to the component to be cooled to cool and lubricate the component to be cooled.

In the present disclosure, the terms "first" and "second" are only used for descriptive purposes and cannot be understood as indicating or implying relative importance. The term "plurality of" refers to two or more, unless otherwise clearly defined.

Those skilled in the art will easily think of other implementations of the present disclosure after considering the specification and practicing the present disclosure disclosed herein. The present disclosure is intended to cover any variations, uses, or adaptive changes of the present disclosure, which follow the general principles of this application and include common knowledge or conventional technical means in the technical field not disclosed in the present disclosure. The description and examples are only regarded as exemplary.

It should be understood that the present disclosure is not limited to the precise structure that has been described above and shown in the drawings, and various modifications and changes can be made without departing from its scope. The scope of the present disclosure is only limited by the appended claims.

## Claims

1. A hydraulic system, applied to a hybrid transmission, and comprising an oil supply module (1), a high-pressure module (2), and a cooling-lubricating module (3);
wherein the oil supply module (1) comprises an electric pump (11) connected to the high-pressure module (2); and
the high-pressure module (2) is configured to supply oil to an actuator (100) of a vehicle through the electric pump (11), the cooling-lubricating module (3) is configured to cool and lubricate a component to be cooled of the vehicle, and the cooling-lubricating module (3) comprises a first on-off valve (31), wherein the first on-off valve (31) is arranged between the electric pump (11) and the component to be cooled, and the first on-off valve (31) is configured to be opened or closed according to an operating mode of the vehicle.

2. The hydraulic system according to claim 1, wherein the oil supply module (1) further comprises a mechanical pump (12), wherein the mechanical pump (12) is connected to the cooling-lubricating module (3) and configured to operate with wheels or a drive motor of the vehicle.

3. The hydraulic system according to claim 2, wherein the cooling-lubricating module (3) further comprises a second on-off valve (32), an oil cooler (33), and a temperature detection component (34), wherein the second on-off valve (32) and the oil cooler (33) are arranged in parallel between the mechanical pump (12) and the component to be cooled, the temperature detection component (34) is arranged at an output end of the oil cooler (33) and an output end of the second on-off valve (32), and the second on-off valve (32) is opened or closed according to an oil temperature detected by the temperature detection component (34).

4. The hydraulic system according to claim 3, wherein the oil supply module (1) further comprises an oil tank (13), and the electric pump (11) and the mechanical pump (12) are respectively connected to the oil tank (13); and
the cooling-lubricating module (3) further comprises an overflow valve (36), an input end of the overflow valve (36) is connected to an input end of the second on-off valve (32), and an output end of the overflow valve (36) is connected to an end of the mechanical pump (12) close to the oil tank (13).

5. The hydraulic system according to claim 3 or claim 4, wherein the cooling-lubricating module (3) further comprises a flow control valve (35), wherein an input end of the flow control valve (35) is respectively connected to an output end of the first on-off valve (31), an output end of the oil cooler (33), and an output end of the second on-off valve (32), and an output end of the flow control valve (35) is connected to the component to be cooled.

6. The hydraulic system according to any one of claims 1 to 5, wherein the high-pressure module (2) comprises a control valve (27), wherein an input end of the control valve (27) is connected to the electric pump (11), and an output end of the control valve (27) is connected to the actuator (100).

7. The hydraulic system according to claim 6, wherein the high-pressure module (2) further comprises an accumulator (25) and a pressure detection component (26) connected to each other, wherein both the accumulator (25) and the pressure detection component (26) are disposed between the control valve (27) and the electric pump (11), and the accumulator (25) is configured to charge oil for energy storage or supply oil to the control valve (27) according to a pressure detected by the pressure detection component (26).

8. A hybrid transmission, comprising the hydraulic system as defined in any one of claims 1 to 7.

9. A vehicle, comprising the hybrid transmission as defined in claim 8.

10. The vehicle according to claim 9, wherein the vehicle has one or more of operating modes:
a pure electric drive mode, in which the first on-off valve (31) is opened;
a reverse mode, in which the first on-off valve (31) is opened; or
a hybrid mode, in which the first on-off valve (31) is closed.
